# EUROPEAN PATENT SPECIFICATION

(11) **EP 2 960 636 B1**
(45) Date of publication and mention of the grant of the patent: **11.10.2017**
(21) Application number: 14174697.4
(22) Date of filing: 27.06.2014
(51) Int. Cl.: G01K 3/00, G01K 7/42, H02H 5/04, H02H 6/00

(54) **A method and a system for monitoring temperatures of electric wires within a wire bundle**
Verfahren und System zur Temperaturüberwachung von elektrischen Drähten in einem Leitungsbündel
Procédé et système permettant de surveiller les températures de fils électriques au sein d'un faisceau de fils

(43) Date of publication of application: 30.12.2015
(73) Proprietor: Airbus Operations GmbH, 21129 Hamburg (DE); Airbus Defence and Space GmbH, 85521 Ottobrunn (DE)
(72) Inventor: Schröter, Torben, 21635 Jork (DE); Wattar, Housam, 21149 Hamburg (DE); Koch, Julian, 22559 Hamburg (DE)
(74) Representative: Bird & Bird LLP

(56) References cited:
- DE-A1- 10 257 425
- JP-A- H10 285 784
- FLORIAN LOOS ET AL: "Two approaches for heat transfer simulation of current carrying multicables", MATHEMATICS AND COMPUTERS IN SIMULATION, vol. 101, 19 March 2014 (2014-03-19), pages 13-30, XP055144059, ISSN: 0378-4754, DOI: 10.1016/j.matcom.2014.01.008
- BLACK W Z ET AL: "Ampacity of Diversely Loaded Cables in Covered and Uncovered Trays", IEEE TRANSACTIONS ON POWER DELIVERY, IEEE SERVICE CENTER, NEW YORK, NY, US, vol. 15, no. 1, 1 January 2000 (2000-01-01), XP011049741, ISSN: 0885-8977

## Description

The present invention relates to a method and a system for monitoring temperature of each of the electric wires in a wire bundle coupled with a power supply.

Wire bundles comprising individual electric wires with one end thereof coupled with a power supply and with the other end coupled with a load are used in numerous fields like stationary machines, automobiles, ships and aircraft. In many cases the individual wires are protected against electric overload by fuses or mechanical circuit breakers which either melt or open a connector upon overheating. In modern aircraft it is also known to use electronic protective devices which measure the current flow in the individual wire and which calculate the temperature generated in the wire by such current flow, taking into consideration heating by prior current flows by means of a so-called thermal memory. When a predetermined temperature is exceeded, the protective device causes switching off of the load connected to the wire.

As in these prior systems the temperature is determined on the basis of a wire which is not incorporated in a wire bundle and as the temperature in a wire incorporated in a wire bundle may be higher than such "out-of-bundle" temperature, it is necessary to provide for over dimensioning of the wire to ensure that a non-detected increase of temperature in the wire e.g. due to heat transfer from the wires of the wire bundle does not cause any damage.

JP H10-285784 discloses that loads in a vehicle are supplied with electrical power via wires which are combined in a bundle. Further, it is described that the currents in the wires of the bundle are monitored and when a current exceeds a threshold the respective load is deactivated.

FLORIAN LOOS ET AL; "Two approaches for heat transfer simulation of current carrying multicables"; MATHEMATICS AND COMPUTERS IN SIMULATION; Vol. 101, 19 March 2014 (2014-03-19); pages 13-30 describes how to simulate the temperature distribution in a given wire bundle when currents are applied.

It is an object of the invention to permit a more accurate determination of the actual temperature in an electric wire of a wire bundle.

For solving such an object the invention provides for a method for monitoring temperature of each of the electric wires in a wire bundle coupled with a power supply, wherein each wire is coupled with a load or a cluster of loads and wherein between the power supply and each load an electronic protective device is provided and wherein at least the electric current for each wire is compared with a predetermined threshold value and deactivation of a load is effected when such threshold value is exceeded. Such a method provides determining of the current flows in all wires of the wire bundle and combining the values obtained for obtaining a virtual current flow in the respective wire of the wire bundle, wherein upon exceeding said threshold value by the virtual current flow at least one load is deactivated. Preferably all protective devices are associated with a thermal memory so that heat remaining in the individual wire due to recent current flow can be taken into consideration

To take into consideration the influence of all wires of the wire bundle on an individual wire, the information on current flows in all wires are combined to obtain a corresponding virtual current flow which corresponds to the temperature caused by both the actual current flow in such wire and the increase in temperature caused by all other wires of the wire bundle. Preferably the remaining heat in the wires caused by recent current flows is also taken into consideration. When the virtual current flow determined exceeds the threshold value, at least one load will be deactivated. Thereby the system operates with highly increased safety, since switching off of the corresponding load is effected dependent on the actual temperature of the wire within the wire bundle without requiring over dimensioning for compensating for the unknown temperature difference between the temperature caused by a current flow in an "out-of-bundle" wire and the actual temperature generated by such a current flow in a wire forming part of an electric wire bundle. In addition avoiding over dimensioning of the wires reduces the weight of the bundle which weight reduction is particularly advantageous in connection with aircraft.

In most cases the load connected to the wire in which exceeding of the virtual current flow has been detected, will be switched off. However, in certain cases it is also possible to reduce the actual temperature in such a wire by switching off a load connected to a wire which causes considerable heating of the wire bundle, in particular when operation of such a load is not absolutely necessary at this time.

Further, according to the invention a table is associated with each protective device for determining said virtual current flow. Such a table can be produced by empirical methods and may contain information about the bundle size, the current on the other wires, the type of wiring/wire gauge, heat development by current flow in the individual wires of the wire bundle, heat conductivity of the individual wires of the wire bundle, and the heat transmission coefficients between the individual wires of the wire bundle.

In one embodiment each protective element may comprise such a table stored in a memory element and determine the corresponding virtual current flow obtained by exchanging the data about the current flows between the protective devices.

In another embodiment the tables may be provided in a central unit, and the current flow data of all wires are evaluated in the central unit. The data of virtual current flows are then used to control the corresponding protective devices.

In a system according to the invention for monitoring temperature of each of the electric wires in a wire bundle coupled with a power supply each wire is coupled with a load and between the power supply and each load an electronic protective device is provided wherein at least the electric current for each wire is compared with a predetermined threshold value and deactivation of a load is effected when such threshold value is exceeded.

In one embodiment the protective devices are coupled directly or indirectly for data exchange.

Coupling of the protective devices may be effected by mutually coupling any two protective devices.

In such a system each protective device comprises a table in a memory element containing information on the bundle size and the type of wiring/wire gauge, heat generation by current flow in each of the wires of the wire bundle, on heat conductivity of the individual wires and heat transfer coefficients between the individual wires.

In another embodiment all protective devices are coupled for data transfer with a central unit which central unit comprises a table for each of the wires of the wire bundle, which table contains information on the heat development by current flow in each individual wire of the wire bundle, heat conductivity of the individual wires and heat transfer coefficients between the individual wires of the wire bundle. The central unit further comprises a computation unit for determining the virtual current flows for all protective devices.

In each system each protective device may be associated with a thermal memory for storing information on the recent current flow in the wire to permit taking into consideration remaining heat in the wire.

In the following the invention will be described in more detail with respect to the embodiments shown in the Figures.
- Fig. 1: shows in a schematic block diagram a system according to the invention.
- Fig. 2: shows in a schematic block diagram elements provided in the protective devices of the system according to Fig. 1.
- Fig. 3: shows in a schematic block diagram another embodiment of the invention.

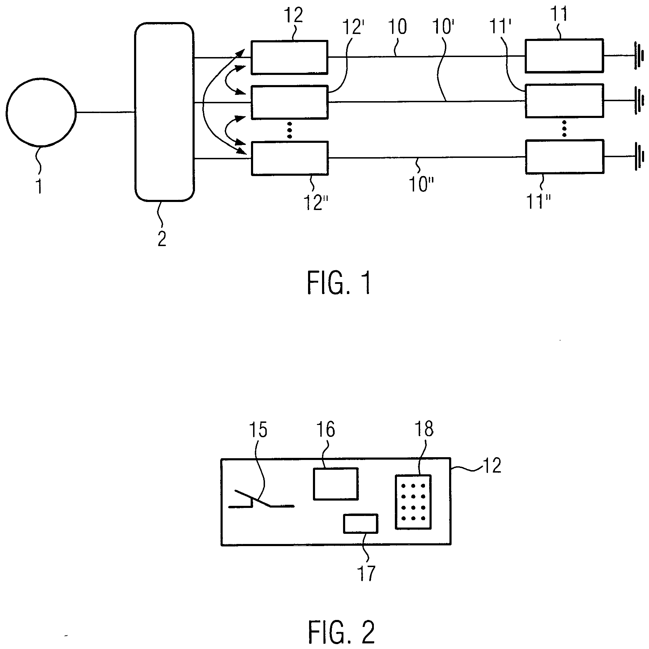

In Fig. 1 an electric wire bundle is shown which comprises schematically shown wires 10, 10' ... 10ⁿ, each wire being connected to a load 11, 11' ... 11ⁿ. All wires are coupled with a power supply 1 through a bus bar 2 which controls feeding of electric current to each of the wires 10, 10' ... 10ⁿ in well-known manner. For protecting each of the wires 10, 10' ... 10ⁿ against overheating an electronic protective device 12, 12 ... 12ⁿ is provided in each wire. A switch 15 in the protective device as indicated in Fig. 2 opens to interrupt current flow to the associated load 11 when current causing a critical temperature threshold value is determined.

As indicated in Fig. 2, the protection unit 12 comprises a computation unit 16, a thermal memory 17 and a table 18. In this preferred embodiment, the thermal memory 17 is shown as a separate device. However it is conceivable that the thermal memory is part of the computation unit 16. In this connection it should be noted that all protective devices 12, 12' ... 12ⁿ are identical in structure and function.

The thermal memory 17 stores information on the present current flow and the more recent current flow from which information the computation unit 16 determines the temperature in wire 10, which would exist if wire 10 were a separate wire not incorporated in a wire bundle. In this embodiment in table 18 information on heat development by current flow of all other individual wires 10, 10' ... 10ⁿ, of heat conductivity of these wires and of the heat transmission coefficients between the individual wires of the wire bundle is stored. Such a table is generated in an empiric way and the table 18 may in the form of or part of a memory element. It can also be included in the computation unit 16.

As indicated in Fig. 1, all protective devices 12, 12', ... 12ⁿ are coupled for data exchange with any two protective devices mutually coupled. Thereby the information on current flow through each wire 10, 10', ... 10ⁿ is transmitted to each protective device 12, 12', ... 12ⁿ and in each protective device the information on current flows obtained is evaluated by the computation unit 16 by means of the information contained in the table 18, i. e. by taking into consideration the influence of all wires of the wire bundle on an individual wire, e. g. wire 10. The virtual current flow obtained thereby represents the current flow which causes the non-measurable actual temperature of the wire, and is then compared to a threshold current value. The protective device 12 interrupts connection of the load 11 with the power supply 1 by opening the switch 15 when such virtual current exceeds the threshold value.

As in such system information on the heating influence of all wires of the wire bundle on each individual wire is available, the system may switch off a wire which causes considerable heating of a wire in which the virtual current flow exceeded the threshold value rather than switching off the latter wire itself.

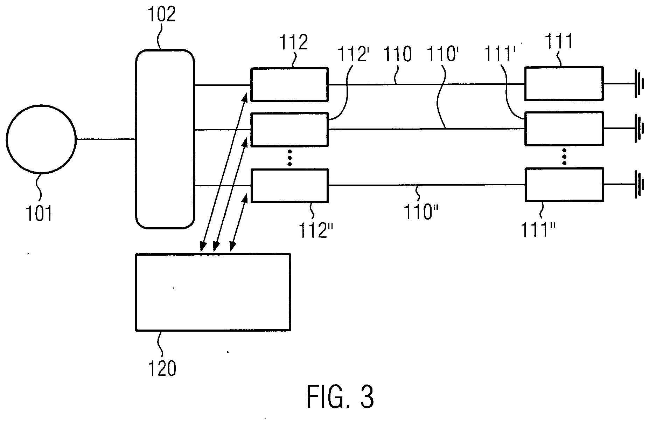

In the embodiment of Fig. 3 a system is schematically shown, and identical or corresponding elements of Fig. 1 are designated with reference numerals increased by 100 compared to Fig. 1. Those elements of Fig. 3 not described in the following are identical in function and structure to those described with respect to Fig. 1.

The system of Fig. 3 comprises a central unit 120 containing a computation unit, thermal memories for each of the wires 110, 110', ... 110ⁿ as well as tables corresponding to table 18 of Fig. 2 for each of the wires 110, 110', ... 110ⁿ. Each of the protective units 112, 112', ... 112ⁿ comprises a switch corresponding to switch 15 in Fig. 2 which is controlled by the central unit 120. The information on current flows through the protective devices 112, 112', ... 112ⁿ is transmitted to the central unit 120, and in the central unit such information is evaluated similar to the way described with respect to Figs. 1 and 2 to obtain information on the actual temperature in each wire 110, 110', ... 110ⁿ in form of a virtual current flow. These virtual flows are compared to corresponding threshold values stored in the central unit 120 and the central unit opens the switch in one or more protective units when at least one threshold value is exceeded, as described in connection with Figs. 1 and 2.

## Claims

1. A method for monitoring temperature of each of the electric wires (10, 10',...10ⁿ) in a wire bundle coupled with a power supply (1) wherein each wire (10, 10',...10ⁿ) is coupled with a load (11, 11',...11ⁿ) and wherein between the power supply and each load an electronic protective device (12, 12',...12ⁿ) is provided, and wherein the current flows in all wires of the wire bundle are determined, **characterized in that** the current flow values obtained are combined for obtaining a virtual current flow for each wire (10, 10',...10ⁿ) of the wire bundle, and wherein said virtual current flow is compared with a predetermined threshold value and deactivation of at least one load is effected when such threshold value is exceeded by the virtual current flow for one of the wires, and wherein for obtaining the virtual current flow each protective device is associated with a table containing information about the bundle size, the current on the other wires, the type of wiring/wire gauge, heat development by current flow in the individual wires of the wire bundle, heat conductivity of the individual wires of the wire bundle, and the heat transmission coefficients between the individual wires of the wire bundle.

2. A method according to claim 1, **characterized in that** the load connected to the wire exceeding said threshold value is deactivated.

3. A method according to claim 1 or 2, **characterized in that** each protective device is associated with a memory storing information on the recent current flow in the wire to permit taking into consideration remaining heat in the wire.

4. A method according to one of claims 1 to 3, **characterized in that** each protective device comprises a table and that determining of the individual virtual current flow is obtained by exchanging current flow data between the protective devices.

5. A method according to one of claims 1 to 3, **characterized in that** said tables are provided within a central unit and that the current flow data of all wires are evaluated within such central unit and that the data of the virtual current flows obtained are used for controlling the associated protective devices.

6. A system for monitoring temperature of each of the electric wires (10, 10' ... 10ⁿ) in a wire bundle configured to be coupled with a power supply (1), wherein each wire is configured to be coupled with a load (11, 11' ... 11ⁿ) and wherein between the power supply and each load an electronic protective device (12, 12' ... 12ⁿ) is provided **characterized in that** the protective devices (12, 12' ... 12ⁿ) comprise a computation unit (16) and are all directly or indirectly coupled for data exchange, wherein each protective device (12, 12' ... 12ⁿ) comprises a table (18) containing information about development of heat by current flow in the individual wires of the wire bundle, heat conductivity of the individual wires and the heat exchange coefficients between the individual wires of the wire bundle,
wherein each computation unit (16) is adapted to determine a virtual current flow for the protective device (12, 12' ... 12ⁿ) from the current flows in all wires of the wire bundle by means of the information contained in the table and
wherein each protective device (12, 12' ... 12ⁿ) is adapted to deactivate at least one load upon exceeding a predetermined threshold value by the virtual current flow.

7. A system according to claim 6, **characterized in that** each protective device (12, 12' ... 12ⁿ) comprises a memory (17) for storing information on the recent current flow in the wire (10, 10' ... 10ⁿ) to permit taking into consideration remaining heat in such wire.

8. A system according one of claims 6 or 7, **characterized in that** all protective devices (12, 12' ... 12ⁿ) are mutually coupled for data exchange.

9. A system for monitoring temperature of each of the electric wires (110, 110' ... 110ⁿ) in a wire bundle configured to be coupled with a power supply (101), wherein each wire is configured to be coupled with a load (111, 111' ... 111ⁿ) and wherein between the power supply and each load an electronic protective device (112, 112' ... 112ⁿ) is provided, **characterized in that** all protective devices (112, 112' ... 112ⁿ) are coupled with a central unit (120) for data transfer, which central unit comprises a table for each protective device with information about heat development by current flow in the individual wires of the wire bundle, heat conductivity of said wires and the heat transfer coefficients between the individual wires of the wire bundle, and that said central unit (120) comprises a computation unit for determining a virtual current flows for all protective devices (112, 112' ... 112ⁿ) by means of the information contained in the table, and wherein the central unit is configured to compare the virtual current in each wire with a predetermined threshold value, and to effect deactivation of a load when such threshold value is exceeded.

10. A system according to claim 9, **characterized in that** the central unit (120) comprises a memory for storing information on the recent current flow in each of the wires to permit taking into consideration remaining heat in such wires.

## Patentansprüche

1. Verfahren zur Temperaturüberwachung jedes der Elektrokabel (10, 10',...10ⁿ) in einem Kabelbündel, das mit einer Energieversorgung (1) verbunden ist,
wobei jedes Kabel (10, 10',...10ⁿ) mit einer Last (11, 11',....11ⁿ) verbunden ist, und wobei zwischen der Energieversorgung und jeder Last eine elektronische Schutzvorrichtung (12, 12',...12ⁿ) bereitgestellt wird, und wobei die Stromflüsse in allen Kabeln des Kabelbündels bestimmt werden, **dadurch gekennzeichnet, dass** die erhaltenen Stromflusswerte zum Erhalten eines virtuellen Stromflusses für jedes Kabel (10, 10',...10ⁿ) des Kabelbündels kombiniert werden, und wobei der virtuelle Stromfluss mit einem vorbestimmten Schwellenwert verglichen wird und eine Deaktivierung von mindestens einer Last bewirkt wird, wenn ein solcher Schwellenwert durch den virtuellen Stromfluss für eines der Kabel überschritten wird, und wobei zum Erhalten des virtuellen Stromflusses jede der Schutzvorrichtungen mit einer Tabelle verknüpft ist, die Information über die Bündelgröße, den Strom durch die weiteren Kabel, den Kabeltyp/Kabeldurchmesser, Wärmeentwicklung durch Stromfluss in den einzelnen Kabeln des Kabelbündels, Wärmeleitfähigkeit der einzelnen Kabel des Kabelbündels und die Wärmeübertragungskoeffizienten zwischen den einzelnen Kabeln des Kabelbündels enthält.

2. Verfahren nach Anspruch 1, **dadurch gekennzeichnet, dass** die Last, die mit dem Kabel verbunden ist, das den Schwellenwert überschreitet, deaktiviert wird.

3. Verfahren nach Anspruch 1 oder 2, **dadurch gekennzeichnet, dass** jede Schutzvorrichtung mit einem Speicher verknüpft ist, der Information über den kürzlichen Stromfluss in dem Kabel speichert, um eine Berücksichtigung einer verbleibenden Wärme in dem Kabel zuzulassen.

4. Verfahren nach einem der Ansprüche 1 bis 3, **dadurch gekennzeichnet, dass** jede Schutzvorrichtung eine Tabelle umfasst und dass ein Bestimmen des einzelnen virtuellen Stromflusses durch Austauschen von Stromflussdaten zwischen den Schutzvorrichtungen erhalten wird.

5. Verfahren nach einem der Ansprüche 1 bis 3, **dadurch gekennzeichnet, dass** die Tabellen innerhalb einer Zentraleinheit bereitgestellt werden und dass die Stromflussdaten aller Kabel innerhalb einer solchen Zentraleinheit ausgewertet werden und dass die Daten der erhaltenen virtuellen Stromflüsse zum Steuern der verknüpften Schutzvorrichtungen verwendet werden.

6. System zur Temperaturüberwachung jedes der Elektrokabel (10, 10',...10ⁿ) in einem Kabelbündel, das konfiguriert wird, an eine Energieversorgung (1) verbunden zu werden, wobei jedes Kabel konfiguriert ist, um mit einer Last (11, 11',...11ⁿ) verbunden zu werden, und wobei zwischen der Energieversorgung und jeder Last eine elektronische Schutzvorrichtung (12, 12',...12ⁿ) bereitgestellt wird, **dadurch gekennzeichnet, dass** die Schutzvorrichtungen (12, 12',...12ⁿ) eine Recheneinheit (16) umfassen und alle direkt oder indirekt zum Datenaustausch gekoppelt sind, wobei jede Schutzvorrichtung (12, 12',...12ⁿ) eine Tabelle (18) umfasst, die Informationen über eine Entwicklung von Wärme durch Stromfluss in den einzelnen Kabeln des Kabelbündels, Wärmeleitfähigkeit der einzelnen Kabel und die Wärmeaustauschkoeffizienten zwischen den einzelnen Kabeln des Kabelbündels enthält,
wobei jede Recheneinheit (16) angepasst ist, einen virtuellen Stromfluss für die Schutzvorrichtung (12, 12'...12ⁿ) aus den Stromflüssen in allen Kabeln des Kabelbündels mithilfe der in der Tabelle enthaltenen Informationen zu bestimmen, und
wobei jede Schutzvorrichtung (12, 12',...12ⁿ) angepasst ist, mindestens eine Last beim Überschreiten eines vorbestimmten Schwellenwerts durch den virtuellen Stromfluss zu deaktivieren.

7. System nach Anspruch 6, **dadurch gekennzeichnet, dass** jede Schutzvorrichtung (12, 12',...12ⁿ) einen Speicher (17) zum Speichern von Information zu dem kürzlichen Stromfluss in dem Kabel (10, 10'...10ⁿ) umfasst, um eine Berücksichtigung einer verbleibenden Wärme in einem solchen Kabel zu ermöglichen.

8. System nach einem der Ansprüche 6 oder 7, **dadurch gekennzeichnet, dass** alle Schutzvorrichtungen (12, 12',...12ⁿ) wechselseitig für einen Datenaustausch gekoppelt werden.

9. System zur Temperaturüberwachung jedes der Elektrokabel (110, 110',...110ⁿ) in einem Kabelbündel, das zu Verbindung mit einer Energieversorgung (101) eingerichtet ist, wobei jedes Kabel zur Verbindung mit einer Last (111, 111',...111ⁿ) eingerichtet ist und wobei zwischen der Energieversorgung und jeder Last eine elektronische Schutzvorrichtung (112, 112',...112ⁿ) bereitgestellt ist,
**dadurch gekennzeichnet, dass** alle Schutzvorrichtungen (112, 112',...112ⁿ) mit einer Zentraleinheit (120) für einen Datenaustausch gekoppelt werden,
welche Zentraleinheit eine Tabelle für jede Schutzvorrichtung mit Informationen über eine Wärmeentwicklung durch Stromfluss in den einzelnen Kabeln des Kabelbündels, Wärmeleitfähigkeit der besagten Kabel und die Wärmeaustauschkoeffizienten zwischen den einzelnen Kabeln des Kabelbündels umfasst, und dass besagte Zentraleinheit (120) eine Recheneinheit zum Bestimmen eines virtuellen Stromflusses für alle Schutzvorrichtungen (112, 112'...112ⁿ) mithilfe der in der Tabelle enthaltenen Informationen umfasst, und wobei die Zentraleinheit eingerichtet ist, den virtuellen Strom in jedem Kabel mit einem vorbestimmten Schwellenwert zu vergleichen und eine Deaktivierung einer Last zu bewirken, wenn ein solcher Schwellenwert überschritten wird.

10. System nach Anspruch 9, das **dadurch gekennzeichnet** wird, dass jede Zentraleinheit (120) einen Speicher zum Speichern von Informationen zu dem kürzlichen Stromfluss in jedem der Kabel umfasst, um eine Berücksichtigung einer verbleibenden Wärme in solchen Kabeln zu ermöglichen.

## Revendications

1. Un procédé de surveillance de la température de chacun des fils électriques (10, 10'... 10ⁿ) dans un faisceau de fils couplé à une alimentation électrique (1), dans lequel chaque fil (10, 10'... 10ⁿ) est couplé à une charge (11, 11'... 11ⁿ) et dans lequel, entre l'alimentation électrique et chaque charge, un dispositif de protection électronique (12, 12'... 12ⁿ) est prévu, et dans lequel les flux de courant dans tous les fils du faisceau de fils sont déterminés, **caractérisé en ce que** les valeurs de flux de courant obtenues sont combinées pour obtenir un flux de courant virtuel pour chaque fil (10, 10'... 10ⁿ) du faisceau de fils, et dans lequel ledit flux de courant virtuel est comparé à une valeur seuil prédéterminée et la désactivation d'au moins une charge est effectuée lorsqu'une telle valeur seuil est dépassée par le flux de courant virtuel pour l'un des fils, et dans lequel pour obtenir le flux de courant virtuel, chaque dispositif de protection est associé à une table contenant des informations concernant la taille du faisceau, le courant sur les autres fils, le type de câblage/jauge de fil, le développement de la chaleur par le flux de courant dans les fils individuels du faisceau de fils, la conductivité thermique des fils individuels du faisceau de fils, et les coefficients de transmission de chaleur entre les fils individuels du faisceau de fils.

2. Un procédé selon la revendication 1, **caractérisé en ce que** la charge reliée au fil dépassant ladite valeur seuil est désactivée.

3. Un procédé selon la revendication 1 ou 2, **caractérisé en ce que** chaque dispositif de protection est associé à une mémoire stockant des informations sur le flux de courant récent dans le fil pour permettre de prendre en considération la chaleur résiduelle dans le fil.

4. Un procédé selon l'une des revendications 1 à 3, **caractérisé en ce que** chaque dispositif de protection comprend une table et **en ce que** la détermination du flux de courant virtuel individuel est obtenue par échange de données de flux de courant entre les dispositifs de protection.

5. Un procédé selon l'une des revendications 1 à 3, **caractérisé en ce que** lesdites tables sont fournies à l'intérieur d'une unité centrale et que les données de flux de courant de tous les fils sont évaluées à l'intérieur d'une telle unité centrale et les données des flux de courant virtuels obtenus sont utilisées pour commander les dispositifs de protection associés.

6. Un système de surveillance de la température de chacun des fils électriques (10, 10'... 10ⁿ) dans un faisceau de fils configuré pour être couplé à une alimentation électrique (1), dans lequel chaque fil est configuré pour être couplé à une charge (11, 11'... 11ⁿ), et dans lequel, entre l'alimentation électrique et chaque charge, un dispositif de protection électronique (12, 12'... 12ⁿ) est prévu, **caractérisé en ce que** les dispositifs de protection (12, 12'... 12ⁿ) comportent une unité de calcul (16) et sont tous couplés directement ou indirectement pour un échange de données, dans lequel chaque dispositif de protection (12, 12'... 12ⁿ) comprend une table (18) contenant des informations concernant le développement de la chaleur par un flux de courant dans les fils individuels du faisceau de fils, la conductivité thermique des fils individuels et les coefficients d'échange de chaleur entre les fils individuels du faisceau de fils,
dans lequel chaque unité de calcul (16) est conçue pour déterminer un flux de courant virtuel pour le dispositif de protection (12,12'... 12ⁿ) à partir des flux de courant dans tous les fils du faisceau de fils au moyen des informations contenues dans la table, et
dans lequel chaque dispositif de protection (12, 12'... 12ⁿ) est conçu pour désactiver au moins une charge lors du dépassement d'une valeur seuil prédéterminée par le flux de courant virtuel.

7. Un système selon la revendication 6, **caractérisé en ce que** chaque dispositif de protection (12, 12'... 12ⁿ) comprend une mémoire (17) pour stocker des informations sur le flux de courant récent dans le fil (10, 10'... 10ⁿ) pour permettre la prise en considération de la chaleur résiduelle dans un tel fil.

8. Un système selon l'une des revendications 6 ou 7, **caractérisé en ce que** tous les dispositifs de protection (12, 12'... 12ⁿ) sont mutuellement couplées pour un échange de données.

9. Un système de surveillance de la température de chacun des fils électriques (110, 110'... 110ⁿ) dans un faisceau de fils configuré pour être couplé à une alimentation électrique (101), dans lequel chaque fil est configuré pour être couplé à une charge (111, 111'... 111ⁿ) et dans lequel entre l'alimentation électrique et chaque charge, un dispositif de protection électronique (112, 112'... 112ⁿ) est prévu, **caractérisé en ce que** tous les dispositifs de protection (112, 112'... 112ⁿ) sont couplés à une unité centrale (120) pour le transfert de données, ladite unité centrale comprenant une table pour chaque dispositif de protection avec des informations sur le développement de la chaleur par un flux de courant dans les fils individuels du faisceau de fils, la conductivité thermique des dits fils et les coefficients de transfert de chaleur entre les fils individuels du faisceau de fils, et **en ce que** ladite unité centrale (120) comprend une unité de calcul pour déterminer les flux de courant virtuel pour tous les dispositifs de protection (112, 112'... 112ⁿ) au moyen des informations contenues dans la table, et dans lequel l'unité centrale est configurée pour comparer le courant virtuel dans chaque fil avec une valeur de seuil prédéterminée, et pour effectuer la désactivation d'une charge lorsqu'une telle valeur seuil est dépassée.

10. Un système selon la revendication 9, **caractérisé en ce que** l'unité centrale (120) comprend une mémoire pour stocker des informations sur le flux de courant récent dans chacun des fils pour permettre de prendre en considération la chaleur résiduelle dans de tels fils.
